# EUROPEAN PATENT APPLICATION

(11) **EP 2 570 703 A2**
(43) Date of publication of application: **20.03.2013**
(21) Application number: 11780756.0
(22) Date of filing: 12.04.2011
(51) Int. Cl.: F16H 63/30, F16H 3/093

(54) **SHIFT APPARATUS FOR A DUAL CLUTCH TRANSMISSION**

(30) Priority: 13.05.2010 KR 20100044801
(71) Applicant: Sol-Tech Co., Ltd., Hwaseong-si, Gyeonggi-do 445-902 (KR)
(72) Inventor: YIM, Jin Whan, Goyang-si Gyeonggi-do 410-350 (KR); KIM, Han Sool, Gwacheon-si Gyeonggi-do 427-708 (KR)
(74) Representative: Hano, Christian
(86) International application number: PCT/KR2011/002558
(87) International publication number: WO 2011/142539

(57) **Abstract**

Provided is a shifting apparatus of a dual clutch transmission, including: a plurality of synchronizers (S1, S2, S3, S4) mounted to a first support shaft 23 or a second support shaft 24, respectively, to be positioned between driven gears (D1, D2, D3, D4, D5, D6, D7, DR) that are synchronized with drive gears (G1, G2, G3, G4, G5, G6, G7) that are connected to a first input shaft 21 or a second input shaft 22 connected to a first clutch (C1) and a second clutch (C2) of dual clutches 11; a plurality of shift forks 41, 42, 43, and 44, connected to the synchronizers (S1, S2, S3, S4) and having follower pins 41c,42c,43c, and 44c, respectively; and a cam 50 connected to the follower pins 41c, 42c, 43c, and 44c of the plurality of shift forks and formed with a cam groove 51 along the periphery thereof. The cam 50 is connected to the follower pins 41 c, 42c, 43c,and 44c of the plurality of shift forks so that at least two of the follower pins provided to the plurality of shift forks41, 42, 43, and 44, respectively, are arranged along the cam groove 51, and engages the synchronizers (S1, S2, S3, S4) and the driven gears (D1, D2, D3, D4, D5, D6, D7, DR) by shifting the follower pins so that the shift forks are moved. Accordingly, a shift control may be readily, softly, and efficiently performed, whereby a vehicle passenger may feel comfortable.

## Description

### CROSS-REFERENCE TO RELATED APPLICATION

This application claims the benefit of Korean Patent Application No. 10-2010-0044801, filed on May 13, 2010, in the Korean Intellectual Property Office, the disclosure of which is incorporated herein by reference.

### BACKGROUND OF THE INVENTION

### 1. Field of the Invention

The present invention relates to a shifting apparatus of a dual clutch transmission, and more particularly, to a shifting apparatus of a dual clutch transmission that may reduce the number of parts by forming at least one cam groove on a cam and by connecting follower pins of a plurality of shift forks to the cam groove and thereby achieve simplification and may also enhance the reliability of operation when performing a shift control.

### 2. Description of the Related Art

A dual clutch transmission (DCT) includes a two clutch mechanism system and is readily operable and has small power loss and has a fast transmission time.

When it is assumed that the DCT shifts a gear to 1 speed through 6 speed, and when number 1 clutch is driving at 1 speed, number 2 clutch is waiting in a state where it has shifted to 2 speed. When gearshift starts, the power of number 1 clutch is disconnected and the number 2 clutch is connected. When driving at 2 speed starts, the number 1 clutch prepares gearshift to 3 speed gear, disengaging 1 speed gear. Accordingly, it only needs to wait for clutch connection for a subsequent gearshift. Due to the above characteristic, the DCT has a fast transmission time. Even compared to a manual transmission, the transmission time of the DCT is shorter.

The DCT needs to be formed to have a forward gear ratio at which gears are alternately arranged at the respective input shafts. That is, to perform up-shift from the first gear to the second gear, the first gear and the second gear need to be disposed on different input shafts. Therefore, odd gears may be connected to a single input shaft, and even gears may also be connected to another input shaft.

An input shaft transfers an applied torque to a single support shaft that includes a gear engaged with an input shaft gear. The engaging gear of the support shaft is engaged with the gear of the input shaft at all times. The support shaft also includes an output gear that is engaged with a gear of an output shaft. An input torque of an engine is transferred from one of clutches to the input shaft, is transferred to the support shaft through a gear set, and is transferred from the support shaft to the output shaft. Here, a reverse gear set includes a gear included in one of the input shaft, a gear included in the support shaft, and an intermediate gear installed in a separate support shaft mounted to be engaged between two gears so that the reverse motion of the output shaft may be achieved.

The gear combination of the DCT is similar to a conventional manual transmission. One of gears included in each gear set is mounted to each shaft using a free rotation scheme based on a shaft. A mechanical selection of each gear set generally uses a synchronizer. The synchronizer is mounted to a shaft next to a freely-rotating gear to selectively combine the gear with the shaft, thereby enhancing the transmission time and even further decreasing the transmission time compared to the manual transmission.

A conventional dual clutch transmission requires a shifting apparatus that may perform a shift at an opportune time within the transmission so that the shift may be softly and efficiently performed. When the shifting apparatus cannot adjust a transmission time appropriately, it becomes very complex to control the transmission time of the dual clutch transmission. Accordingly, a vehicle passenger may not feel comfortable.

### SUMMARY OF THE INVENTION

The present invention provides a shifting apparatus of a dual clutch transmission that may form at least one cam groove on a cam and connect follower pins of a plurality of shift forks to the cam groove, thereby reducing the number of parts and achieving the simplification and enhancing reliability of a shift control operation.

The present invention also provides a shifting apparatus of a dual clutch transmission that may form a cam groove using a guide cover and a cylindrical member, thereby increasing the processing accuracy and enhancing the reliability of a shift control operation.

The present invention also provides a shifting apparatus of a dual clutch transmission that may reduce the number of parts and increase the processing accuracy, so that a shift control operation may be softly and efficiently performed, and thereby enables a vehicle passenger to feel comfortable.

According to an aspect of the present invention, there is provided a shifting apparatus of a dual clutch transmission, the shifting apparatus comprising: a plurality of synchronizers mounted to a first support shaft or a second support shaft, respectively, to be positioned between driven gears that are synchronized with drive gears that are connected to a first input shaft or a second input shaft connected to a first clutch and a second clutch of dual clutches; a plurality of shift forks, each connected to the synchronizer and having a follower pin; and a cam connected to the follower pins of the plurality of shift forks and formed with a cam groove along the periphery thereof. The cam may be connected to the follower pins of the plurality of shift forks so that at least two of the follower pins provided to the plurality of shift forks, respectively, may be arranged along the cam groove, and may engage the synchronizers and the driven gears by shifting the follower pins so that the shift forks may be moved.

According to another aspect of the present invention, there is provided a shifting apparatus of a dual clutch transmission, the shifting apparatus including: a plurality of synchronizers mounted to a first support shaft or a second support shaft, respectively, to be positioned between driven gears that are synchronized with drive gears that are connected to a first input shaft or a second input shaft connected to a first clutch and a second clutch of dual clutches; a plurality of shift forks, each connected to the synchronizer and having a follower pin; and a cam formed with a cam groove that is connected to the follower pints of the plurality of shift forks so that the follower pins provided to the plurality of shift forks, respectively, are arranged, and engaging the synchronizer and the driven gear by shifting the follower pin so that the shift forks is shifted. The cam groove may include: a first direction shift groove guiding the follower pin to maintain a first shift state; an inclined groove formed to be extended from the first direction shift groove, and guiding the follower pin to shift from the first shift state to a second shift state different from the first shift state; a second direction shift groove formed to be extended from the inclined groove, and guiding the follower pin to maintain the second shift state; a first half pitch moving groove formed to be extended from the second direction shift groove, and guiding the follower pin to shift from the second shift state to a neutral shift state; a plurality of neutral grooves formed to be extended from the first half pitch moving groove, and guiding the follower pin to maintain the neutral shift state that is an intermediate state between the first shift state and the second shift state; and a second half pitch moving groove formed to be extended from each of the neutral groove and the first direction shift groove, and guiding the follower pin to shift from the neutral state to the first shift state.

### BRIEF DESCRIPTION OF THE DRAWINGS

The above and/or other aspects of the present invention will become apparent and more readily appreciated from the following description of the preferred embodiments, taken in conjunction with the accompanying drawings in which:
FIG. 1 is an assembly perspective view of a dual clutch transmission according to the present invention;
FIG. 2 is an exploded assembly perspective view of a shifting apparatus of FIG. 1;
FIG. 3 is a diagram illustrating a configuration of the shifting apparatus of the dual clutch transmission of FIG. 1;
FIG. 4 is a side-view of a cam of FIG. 2;
FIGS. 5 through 7 are views illustrating a shift control operation state of the shifting apparatus of FIG. 2 according to a first embodiment;
FIGS. 8 and 9 are views illustrating a shift control operation state of the shifting apparatus of FIG. 2 according to a second embodiment; and
FIGS. 10 and 11 are views illustrating a shift control operation state of the shifting apparatus according to a third embodiment.

### DETAILED DESCRIPTION OF THE INVENTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

Hereinafter, embodiments of a shifting apparatus of a dual clutch transmission (DCT) according to the present invention will be described with reference to the accompanying drawings.

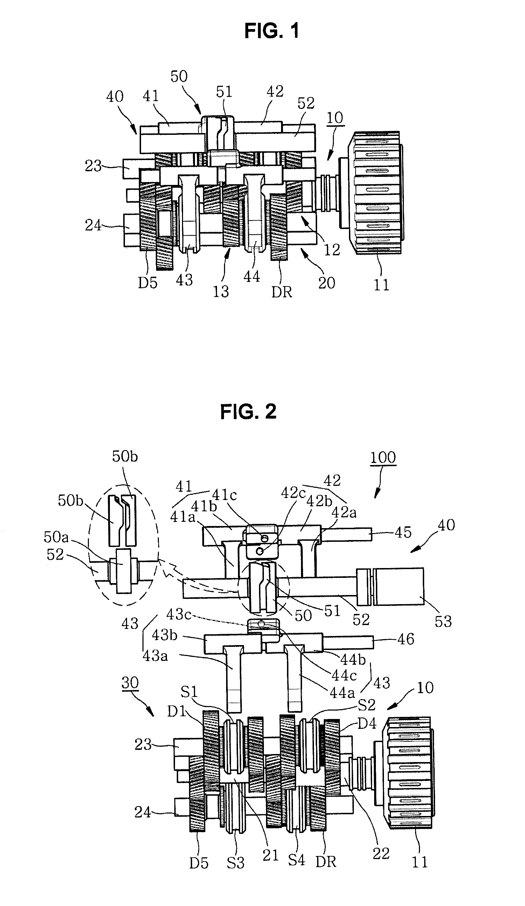

As shown in FIGS. 1 through 3, the dual clutch transmission of the present invention includes a transmission gear mechanism 10 and a shifting apparatus 100. The shifting apparatus 100 includes a synchronizer mechanism 30, a fork mechanism 40, and a cam 50. Hereinafter, each configuration thereof will be described.

The transmission gear mechanism 10 includes a plurality of drive gears (G1, G2, G3, G4, G5, G6, G7) that is connected to a first input shaft 21 or a second input shaft 22 connected to a first clutch (C1) and a second clutch (C2) of dual clutches 11, and a plurality of driven gears (D1, D2, D3, D4, D5, D6, D7, DR) that is mounted to a first support shaft 23 and a second support shaft 24. The transmission gear mechanism 10 includes the dual clutches 11 and a shaft mechanism 20.

The dual clutches 11 include the first clutch (C1) and the second clutch (C2). The dual clutches 11 include the first clutch (C1) and second clutch (C2). The dual clutches 11 receives the rotation force, generated from an engine (not shown), through the first clutch (C1) or the second clutch (C2), and selectively transfers the rotation force to the first input shaft 21 or the second input shaft 22. The dual clutches 11 selectively transfers the rotation force to the first input shaft 21 or the second input shaft 22 through controlling of the oil pressure. Such detailed configuration may employ a known technology and thus, a further detailed description related thereto will be omitted here.

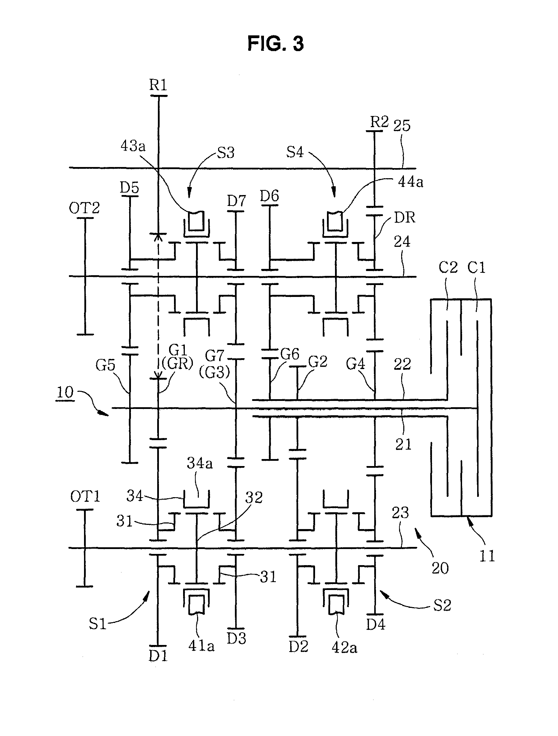

The shaft mechanism 20 includes the first input shaft 21, the second input shaft 22, the first support shaft 23, the second support shaft 24, and a backward idle axle 25. The first input shaft 21 is connected to the first clutch (C1) of the dual clutches 11 to thereby receive the rotation force generated from the engine. The second input shaft 22 is connected to the second clutch (C2) of the dual clutches 11 to thereby receive the rotation force generated from the engine, and is disposed to overlap the first input shaft 21 on the same shaft. The second input shaft 22 is formed in a hollow shape to overlap the first input shaft 21, and is inserted with the first input shaft 21. The first support shaft 23 is disposed to be in parallel with the first input shaft 21 and the second input shaft 22, and is connected to the first input shaft 21 to receive the rotation force generated from the engine. The second support shaft 24 is disposed to be in parallel with the first input shaft 21 and the second input shaft 22, and is connected to the second input shaft 22 to receive the rotation force generated from the engine. As shown in FIG. 3, sub driven gears (R1, R2) synchronized with the first drive gear (G1) (synchronizing connection relationship is indicated as an indicator in FIG. 3) are mounted to the backward idle shaft 25. The sub driven gears (R1, R2) are synchronized with the reverse driven gear (DR). The reverse driven gear (DR) receives the inverse rotation force generated from the engine through the first clutch (C1), the first input shaft 21, and the sub driven gears (R1,R2).

The plurality of drive gears (G1, G2, G3, G4, G5, G6, G7) is connected to the first input shaft 21 or the second input shaft 22 to have different gear ratios, that is, transmission ratios. Among the plurality of drive gears (G1, G2, G3, G4, G5, G6, G7), odd drive gears (G1, G3, G5, G7) are connected to the first input shaft 21 and even drive gears (G2, G4, G6) are connected to the second input shaft 22. That is, the first drive gear (G1) and the third drive gear (G3) constitute a pair and thereby are connected to the first input shaft 21. The second drive gear (G2) and the fourth drive gear (G4) constitute a pair and thereby are connected to the second input shaft 22. Also, the fifth drive gear (G5) and the seventh drive gear (G7) constitute a pair and thereby are connected to the first input shaft 21. Even though the sixth drive gear (G6) and the reverse drive gear (GR) constitute a pair, the sixth drive gear (G6) is connected to the second input shaft 22 and the reverse drive gear (GR) is connected to the first input shaft 21. Here, the first drive gear (G1) is used for the reverse drive gear (GR). That is, the first drive gear (G1) is used for gearshift to 1 speed or backward.

The plurality of driven gears (D1, D2, D3, D4, D5, D6, D7, DR) is mounted to the first support shaft 23 and the second support shaft 24 to thereby have different gear ratios, that is, transmission ratios. Among the plurality of driven gears (D1, D2, D3, D4, D5, D6, D7, DR), the first driven gear (D1) and the third driven gear (D3) constitute a pair and thereby are mounted to the first support shaft 23 without rotation interference. The second driven gear (D2) and the fourth driven gear (D4) constitute a pair and thereby are mounted to the first support shaft 23. The fifth driven gear (D5) and the seventh driven gear (D7) constitute a pair and are mounted to the second support shaft 24 without rotation interference. The sixth driven gear (D6) and the reverse driven gear (DR) constitute a pair and are mounted to the second support shaft 24.

The synchronizer mechanism 30 of the shifting apparatus 100 includes a plurality of synchronizers (S1, S2, S3, S4). The plurality of synchronizers (S1, S2, S3, S4) is mounted to the respective first support shaft 23 and the second support shaft 24 to be positioned between the plurality of driven gears (D1, D2, D3, D4, D5, D6, D7, DR). The synchronizer mechanism 30 includes the first synchronizer (S1), the second synchronizer (S2), the third synchronizer (S3), and the fourth synchronizer (S4).

The first synchronizer (S1) is spline-combined with the first support shaft 23 to be positioned between the first driven gear (D1) and the third 3driven gear (D3) and thereby, is shifted by a shift fork 41 to be engaged with the first driven gear (D1) or the third driven gear (D3). The second synchronizer (S2) is mounted to one side of the first synchronizer (S1) and is spline-combined with the first support shaft 23 to be positioned between the second driven gear (D2) and the fourth driven gear (D4) and thereby, is shifted by a second shift fork 42 to be engaged with the second driven gear (D2) or the fourth driven gear (D4). The third synchronizer (S3) is disposed to face the first synchronizer (S1), and is spline-combined with the second support shaft 24 to be positioned between the fifth driven gear (D5) and the seventh driven gear (D7) and is shifted by a shift fork 43 to be engaged with the fifth driven gear (D5) or the seventh driven gear (D7). The fourth synchronizer (S4) is mounted on one side of the third synchronizer (S3), and is spline-combined with the second support shaft 24 to be positioned between the sixth driven gear (D6) and the reverse driven gear (DR) and thereby is shifted by a shift fork 44 or by the sixth driven gear (D6) or the reverse driven gear (DR).

Also, as shown in FIG. 3, each of the first through fourth synchronizers (S1, S2, S3, S4) includes a clutch gear 31, a sync-hub 32, a sync-ring (not shown), and a sleeve 34. A detailed configuration of the first through fourth synchronizers (S1, S2, S3, S4) uses a known technology and thus, will be briefly described.

The clutch gear 31 is combined between the respective driven gears (D1, D2, D3, D4, D5, D6, D7, DR) and has a cone member (not shown). The sync-hub 32 is spline-combined with the first support shaft 23 or the second support shaft 24, and the sync-ring(not shown) is mounted between the sync-hub 32 and the clutch gear 31. The sleeve 34 is combined with the sync-hub 32, and is formed with an engaging groove 34a that is engaged with the shift fork mechanism 40 on the periphery of the sleeve 34, and is moved by the shift fork mechanism 40 to be friction-combined with the cone member (not shown) of the clutch member 31 and thereby enable rotation of the driven gears (D1, D2, D3, D4, D5, D6, D7, DR) to be synchronized with the first support shaft 23 or the second support shaft 24.

The shift fork mechanism 40 of the shifting apparatus 100 includes a plurality of shift forks 41, 42, 43, and 44. The plurality of shift forks 41, 42, 43, and 44 is connected to the synchronizers (S1, S2, S3, S4) and has follower pins 41c, 42c, 43c, and 44c, respectively. The plurality of shift forks 41, 42, 43, and 44 includes the first shift fork 41, the second shift fork 42, the third shift fork 43, and the fourth shift fork 44. Here, each of the first shift fork 41 and the second shift fork 42 is engaged with a first guide member 45 and thereby is guided and moved by the first guide member 45 through rotation of the cam 50. Each of the third shift fork 43 and the fourth shift fork 44 is engaged with a second guide member 46 and thereby is guided and moved by the second guide member 46 through rotation of the cam 50.

The first shift fork 41, the second shift fork 42, the third shift fork 43, and the fourth shift fork 44 include the fork members 41a, 42a, 43a, and 44a, moving blocks 41 b, 42b, 43b, and 44c, and the follower pins 41 c, 42c, 43c, and 44c, respectively. The fork members 41a, 42a, 43a, and 44a are engaged with the engaging groove 34a formed on the sleeve 34, the moving blocks 41 b, 42b, 43b, and 44c are integrally formed with the fork members 41 a, 42a, 43a, and 44a and thereby are inserted into the first guide member 45 or the second guide member 46 to move along the first guide member 45 or the second guide member 46. The follower pins 41 c, 42c, 43c, and 44c are formed on the moving blocks 41 b, 42b, 43b, and 44c to thereby be connected to the cam groove 51 and be shifted to be in parallel with the first guide member 45 or the second guide member 46 by rotation of the cam 50 and thereby move the fork members 41 a, 42a, 43a, and 44a.

The cam 50 is connected to the follower pins 41 c, 42c, 43c, and 44c of the plurality of shift forks 41, 42, 43, and 44, and the cam groove 51 is formed along the periphery of the cam 50. The cam 50 is connected to the follower pins 41c, 42c, 43c, and 44c so that the follower pins 41 c, 42c, 43c, and 44c provided to the plurality of shift forks 41, 42, 43, and 44, respectively, may be arranged along the cam groove 51, and shifts the follower pins 41c, 42c, 43c, and 44c to move the shift forks 41, 42, 43, and 44 and thereby enables the synchronizers (S1, S2, S3, S4) to be engaged with the driven gears (D1, D2, D3, D4, D5, D6, D7, DR).

As shown in an enlarged view of major components of FIG. 2, the cam 50 includes a cylindrical member 50a and a plurality of guide covers 50b. The cylindrical member 50a further includes a shaft 52 that is connected to a motor 53 to thereby be rotated by the motor 53. The cylindrical member 50a is engaged with the shaft 52 to thereby be rotated in interaction with rotation of the shaft 52 and to thereby rotate the cam 50. The plurality of guide covers 50b is mounted to surround both sides of the cylindrical member 50a, and is mounted to be exposed from the cylindrical member 50a, and is combined with each other to be spaced apart from each other, thereby forming the cam groove 51. As described above, when forming the cam groove 51 on the periphery of the cam 50, the cam groove 51 may be readily formed by processing the cross-section of the plurality of guide covers 50b and then inserting the same into cylindrical member 50a.

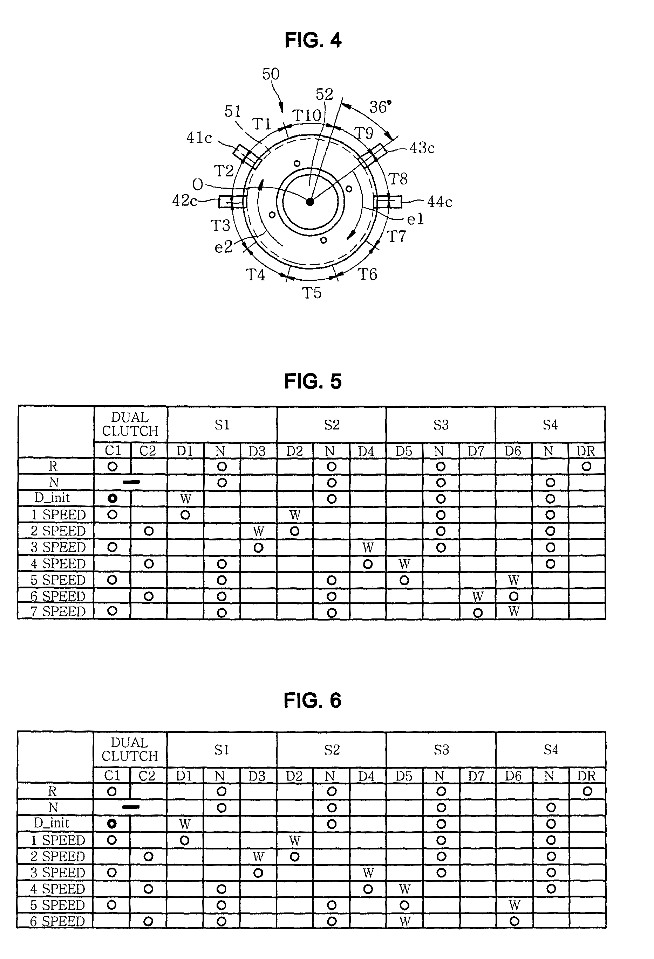

As shown in FIG. 4, the periphery of the cam 50 is divided into a plurality of pitches (T1, T2, ∼, T10) having the equal distance T, and the follower pins 41c, 42c, 43c, and 44c that are respectively provided to the first shift fork 41, the second shift fork 42, the third shift fork 43, and the fourth shift fork 44 are mounted to the cam groove 51 to be spaced apart from each other by a single pitch. For example, as shown in FIG. 4, the first shift fork 41 and the second shift fork 42 are mounted to the cam groove 51 to be spaced apart from each other by a single pitch, and the third shift fork 43 and the fourth shift fork 44 are mounted to the cam groove 51 to be spaced apart from each other by a single pitch. The second shift fork 42 and the third shift fork 43 are mounted to be spaced apart from each other by three pitches. The cam 50 rotates by a single pitch to thereby shift the follower pins 41 c, 42c, 43c, and 44c such that the shift forks 41, 42, 43, and 44 may be moved, thereby enabling the synchronizers (S1, S2, S3, S4) to be engaged with the driven gears (D1, D2, D3, D4, D5, D6, D7, DR).

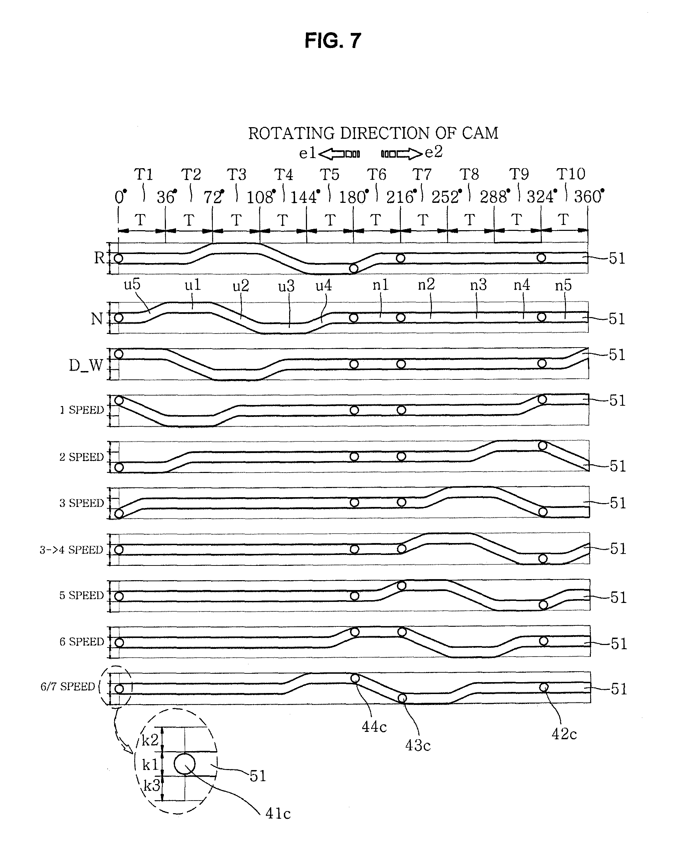

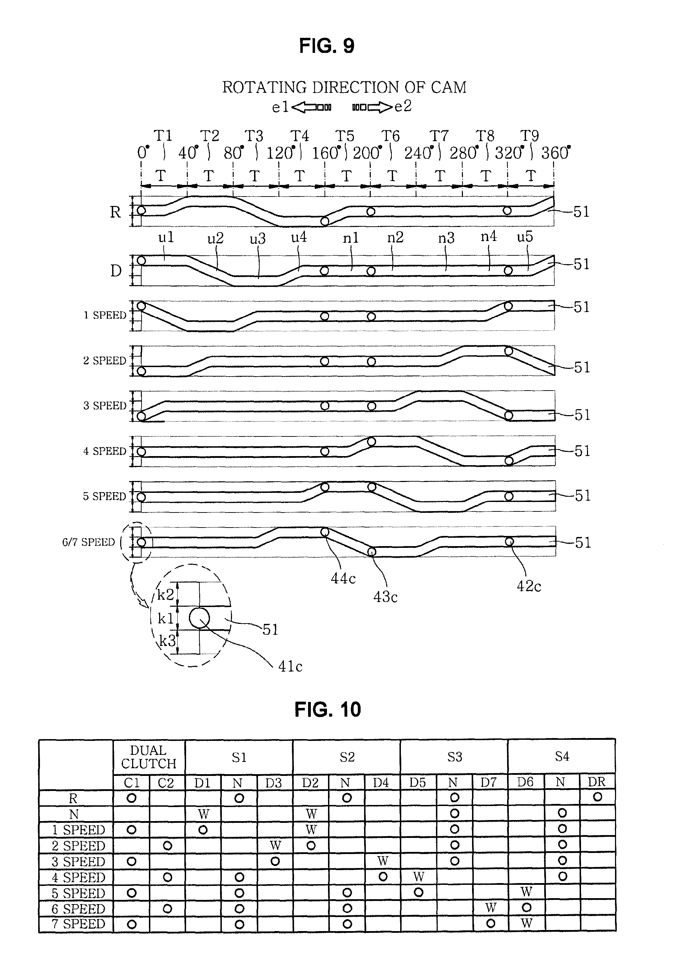

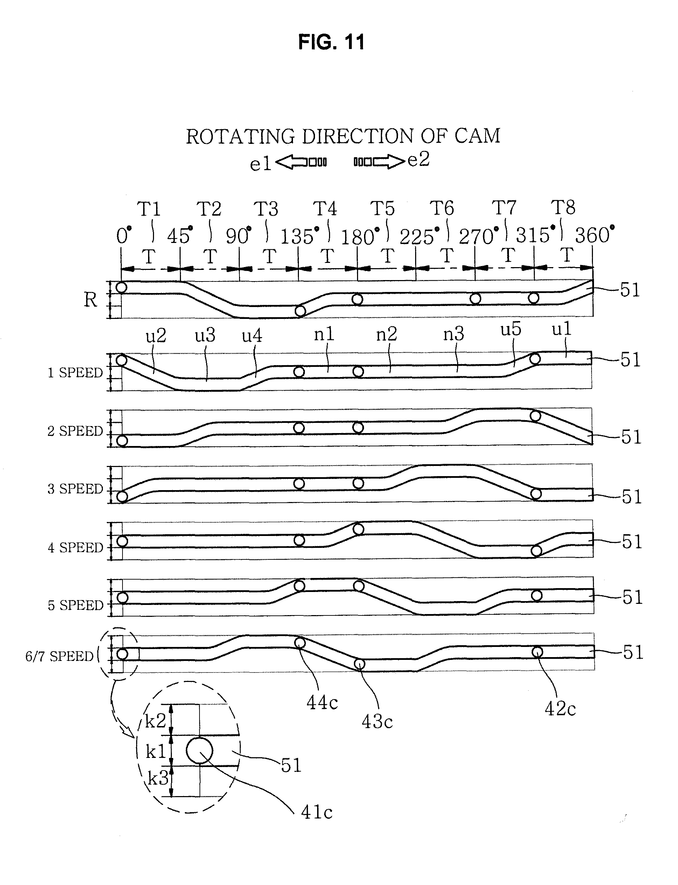

As shown in FIGS. 5 through 10, the plurality of pitches of the cam 50 is used to divide the periphery of the cam 50 at 36 degrees through 45 degrees based on a rotation center shaft (O). That is, the plurality of pitches of the cam 50 is divided into one of a first pitch distance (T: see FIG. 7), a second pitch distance (T: see FIG. 9), and a third pitch distance (T: see FIG. 11). As shown in FIGS. 4 and 7, the first pitch distance (T) divides the periphery of the cam 50 into ten pitches (T1,T2,∼,T10) at 36 degrees based on the rotation center shaft (O), the second pitch distance (T) divides the periphery of the cam 50 into nine pitches (T1,T2,∼,T9) at 40 degrees based on the rotation center shaft O, and the third pitch distance (T) divides the periphery of the cam 50 into eight pitches (T1,T2,∼,T8) at 45 degrees based on the rotation center shaft O.

Hereinafter, an example of dividing the periphery of the cam 50 in the shifting apparatus of the dual clutch transmission according to an embodiment of the present invention will be described with reference to FIGS. 4, 5, and 7.

The cam groove 51 includes a first direction shift groove (u1), an inclined groove (u2), a second direction shift groove (u3), a first half-pitch moving groove (u4), a plurality of neutral grooves (n1, n2, n3, n4, n5), and a second half-pitch moving groove (u5).

The first direction shift groove (u1) guides the follower pins 41c, 42c, 43c, and 44c to maintain a first shift state (k2). The inclined groove (u2) is formed to be extended from the first direction shift groove (u1) and guides the follower pins 41 c, 42c, 43c, and 44c to shift from the first shift state (k2) to a second shift state (k3) that is different from the first shift state (k2). The second direction shift groove (u3) is formed to be extended from the inclined groove (u2) and guides the follower pins 41 c, 42c, 43c, and 44c to maintain the second shift state (k3). The first half-pitch moving groove (u4) is formed to be extended from the second direction shift groove (u3) and guides the follower pins 41c, 42c, 43c, and 44c to shift from the second shift state (k3) to a neutral shift state (k1). Here, the neutral shift state (k1), the first shift state (k2), and the second shift state (k3) are formed at the same distances.

The plurality of neutral grooves (n1, n2, n3, n4, n5) is extended from the first half-pitch moving groove (u4), and guides the follower pins 41 c, 42c, 43c, and 44c to maintain a neutral shift state (k1) that is an intermediate state between the first shift state (k2) and the second shift state (k3). Here, the plurality of neutral groove (n1, n2, n3, n4, n5) includes the first neutral groove (n1), the second neutral groove (n2), the third neutral groove (n3), the fourth neutral groove (n4), and the fifth neutral groove (n5). As shown in FIGS. 9 and 11, the plurality of neutral grooves (n1, n2, n3, n4, n5) includes four or three grooves. That is, when the periphery of the cam 50 is divided into nine pitches (T1, T2, ∼, T9) at 40 degrees based on the rotation center shaft (O), the plurality of neutral grooves includes four neutral grooves, for example, the first neutral groove (n1), the second neutral groove (n2), the third neutral groove (n3), and the fourth neutral groove (n4). As shown in FIG. 11, when the periphery of the cam 50 is divided into eight pitches (T1, T2, ∼, T8) at 45 degrees based on a rotation center shaft (O), the plurality of neutral grooves includes three neutral grooves, for example, the first neutral groove (n1), the second neutral groove (n2), and the third neutral groove (n3). As shown in FIGS. 7, 9, and 11, the plurality of neutral grooves (n1, n2, n3, n4, n5) includes three to five neutral grooves based on the number of pitches divided from the periphery of the cam 50.

Hereinafter, an operation of a shifting apparatus of a dual clutch transmission based on the number of pitches divided from the periphery of the cam 50 according to an embodiment of the present invention will be described.

As shown in FIGS. 5 to 7, an operation of a dual clutch transmission in a case where the periphery of the cam 50 is divided into ten pitches (T1, T2, ∼, T10) based on the rotation center shaft (O) will be described.

As shown in FIGS. 5 to 7, a gearshift of a shifting apparatus of a dual cutch transmission according to the present invention includes reverse (R), neutral (N), and 1 speed to 7 speed, and each gearshift process will be sequentially described.

In neutral (N), the follower pins 41 c, 42c, 43c, and 44c of the first to fourth shift forks 41, 42, 43, and 44 provided to the first to fourth synchronizers (S1, S2, S3, S4) are shifted to the neutral shift state (k1) whereby the first to seventh driven gears (D1, D2, D3, D4, D5, D6, D7) and the reverse driven gear (DR) become to be in a neutral state.

The driving waiting state (D_W) is provided so that the shifting apparatus of the dual clutch transmission of the present invention may further enhance a transmission time before gearshift from the neutral state (N) to speed 1. In the driving waiting state (D_W), the cam groove 51 is rotated in the direction of an indicator (e1) by rotating the cam 50 of the neutral state (N) by a single pitch distance (T). When the cam groove 51 rotates, the follower pin 41 c provided to the first shift fork 41 of the first synchronizer (S1) moves along the second half-pitch moving groove (u5) and reaches one end of the first direction shift groove (u1) through rotation of the cam groove 51 and thereby becomes to be in the second shift state(k2). The first synchronizer (S1) is engaged with the first driven gear (D1). Here, a state where the first clutch (C1) is not connected to the first input shaft 21 is referred to as a waiting state (W). The remaining follower pins 42c, 43c, and 44c are positioned in the neutral shift state (k1).

In the driving waiting state (D_W), when the first driven gear (D1) is in the waiting state (W), gearshift to speed 1 connects the first clutch (C1) to the first input shaft 21, and transfers rotation force, generated from an engine, to the first driven gear (D1) through the first drive gear (G1). The rotation force transferred to the first driven gear (D1) is transferred to the first support shaft 23 and is output through the output drive gear(OT1). When the switch to the first clutch (C1) is completed, the cam groove 51 is rotated into the direction of the indicator (e1) by rotating the cam 50 by a single pitch distance (T). When the cam groove 51 is rotated, the follower pin 41 c provided to the first shift fork 41 of the first synchronizer (S1) moves along the first direction shift groove (u1) from one end to another end to thereby maintain the first shift state (k2), due to the rotation. Accordingly, a state in which the first driven gear (D1) is engaged with the first synchronizer (S1) is maintained. At the same time, the follower pin 42c provided to the second shift fork 42 of the second synchronizer (S2) moves along the second half-pitch moving groove (u5) and reaches one end of the first direction shift groove (u1) that is the same position of the follower pin 41 c of the first shift fork 41 in the driving waiting state (D_W) to thereby be in the first shift state (k2), and the second driven gear (D2) is engaged with the second synchronizer (S2). Here, the second clutch is not connected and thus, the second driven gear (D2) becomes to be in the waiting state (W). In this state, the remaining follower pins 43c and 44c are positioned in the neutral shift state (k1).

Gearshift to 2 speed releases the connection between the first clutch (C1) and the first input shaft 21 and then connects the second clutch (C2) and the second input shaft 22, thereby transferring the rotation force generated from the engine to the second driven gear (D2) of the waiting state (W). The rotation force transferred to the second driven gear (D2) is transferred to the first support shaft 23 and thereby is output through the output drive gear (OT1). When switching from the first clutch (C1) to the second clutch (C2) is performed, the cam groove 51 is rotated into the direction of the indicator (e1) by rotating the cam 50 by a single pitch distance (T). When the cam groove 51 is rotated, the follower pin 42c provided to the second shift fork 42 of the second synchronizer (S2) moves along the first direction shift groove (u1) to thereby maintain the first shift state (k2), due to the rotation. Accordingly, a state in which the second driven gear (D2) is engaged with the second synchronizer (S2) is maintained. At the same time, the follower pin 41 c provided to the first shift fork 41 of the first synchronizer (S1) moves along the inclined groove (u2) and reaches one end of the second direction shift groove (u3) and thereby becomes to be in the second shift state (k3). The first synchronizer (S1) is engaged with the third driven gear (D3) and thereby becomes to be in the waiting state (W). The remaining follower pins 43c and 44c are positioned in the neutral shift state (k1).

Gearshift to 3 speed releases the connection between the second clutch (C2) and the second input shaft 22 and then connects the first clutch (C1) and the first input shaft 21, thereby transferring the rotation force generated from the engine to the third driven gear (D3) of the waiting state (W). The rotation force transferred to the third driven gear (D3) is transferred to the first support shaft 23 and thereby is output through the output drive gear (OT1). When switching from the second clutch (C2) to the first clutch (C1) is performed, the cam groove 51 is rotated into the direction of the indicator (e1) by rotating the cam 50 by a single pitch distance (T). Through this, the fourth driven gear (D4) is positioned in the waiting state (W) while maintaining the connection of the third driven gear (D3).

Gearshift to 4 speed releases the connection between the first clutch (C1) and the first input shaft 21 and then connects the second clutch (C2) and the second input shaft 22, thereby transferring the rotation force generated from the engine to the fourth driven gear (D4) of the waiting state (W). The rotation force transferred to the fourth driven gear (D4) is transferred to the first support shaft 23 and thereby is output through the output drive gear (OT1). When switching from the first clutch (C1) to the second clutch (C2) is performed, the cam groove 51 is rotated into the direction of the indicator (e1) by rotating the cam 50 by a single pitch distance (T). Through this, the fifth driven gear (D5) is positioned in the waiting state (W) while maintaining the connection of the fourth driven gear (D4).

In the case of gearshift from 3 speed to 4 speed, all of the third driven gear (D3) and the fifth driven gear (D5) may be connected to the first input shaft 21. That is, the third driven gear (D3) may be a connection gear just before gearshift to speed 4, and the fifth driven gear (D5) may be a gear to be connected to the waiting state (W). These two driven gears (D3, D5) are connected to the first input shaft 21. Accordingly, when these two driven gears (D3, D5) are connected to the first support shaft 23 and the second support shaft 24 by the synchronizers (S1, S3), the driven gears (D3, D5) having different gear ratios may be connected to each other. Accordingly, a gear (not shown) of an output shaft (not shown) may be damaged.

FIG. 7 shows that the above phenomenon does not occur in a shape of the cam 50 according to the present invention. In a state of 3->4 speed of FIG. 7, an intermediate process of shifting from 3 speed to 4 speed is provided and thus, the cam 50 is rotated by a half pitch distance (T/2). In the above state, the follower pin 41 c provided to the first shift fork 41 of the first synchronizer (S1) moves along the first half-pitch moving groove (u4) and thereby has reached the neutral shift state (k1). However, the follower pin 41 c provided to the third shift fork 43 of the third synchronizer (S3) has not passed through the second half-pitch moving groove (u5) and thus, it can be known that the follower pin 41 c remains in the neutral shift state (k1) without being connected to the fifth driven gear (D5). Next, when the cam 50 rotates further by another half pitch distance (T/2), the follower pin 43c provided to the first shift fork 41 of the first synchronizer (S1) maintains the neutral shift state (k1) with the first neutral groove (n1) and the follower pin 43c provided to the third shift fork 43 of the third synchronizer (S3) is connected to the fifth driven gear(D5) and thereby enters into the waiting state (W).

Gearshift to 5 speed releases the connection between the second clutch (C2) and the second input shaft 22 and then connects the first clutch (C1) and the first input shaft 21, thereby transferring the rotation force generated from the engine to the fifth driven gear (D5) of the waiting state (W). The rotation force transferred to the fifth driven gear (D5) is transferred to the second support shaft 24 and thereby is output through the output drive gear (OT2). When switching from the second clutch (C2) to the first clutch (C1) is performed, the cam groove 51 is rotated into the direction of the indicator (e1) by rotating the cam 50 by a single pitch distance (T). Through this, the sixth driven gear (D6) is positioned in the waiting state (W) while maintaining the connection of the fifth driven gear (D5).

Gearshift to 6 speed releases the connection between the first clutch (C1) and the first input shaft 21 and then connects the second clutch (C2) and the second input shaft 22, thereby transferring the rotation force generated from the engine to the sixth driven gear (D6) of the waiting state (W). The rotation force transferred to the sixth driven gear (D6) is transferred to the second support shaft 24 and thereby is output through the output drive gear (OT2). When switching from the first clutch (C1) to the second clutch (C2) is performed, the cam groove 51 is rotated into the direction of the indicator (e1) by rotating the cam 50 by a single pitch distance (T), which is the same as 6/7 gearshift of FIG. 7. Through this, the seventh driven gear (D7) is positioned in the waiting state (W) while maintaining the connection of the sixth driven gear (D4).

Gearshift to 7 speed releases the connection between the second clutch (C2) and the second input shaft 22 and then connects the first clutch (C1) and the first input shaft 21, thereby transferring the rotation force generated from the engine to the seventh driven gear (D7) of the waiting state (W). The rotation force transferred to the seventh driven gear (D7) is transferred to the second support shaft 24 and thereby is output through the output drive gear (OT2). Here, the cam 50 does not rotate and the sixth driven gear (D6) maintains an engaged state with the second support shaft 24 by the fourth synchronizer (S4), but enters into the waiting state (W) since the connection between the second clutch (C2) and the second input shaft 22 is released. Since 7 speed is the highest speed, the waiting state is to shift to 6 speed in deceleration. As described above, in the case of deceleration from 7 speed to 1 speed, the gearshift is performed by inversely performing the above acceleration process. In the case of deceleration, the cam 50 rotates into the direction opposite to the acceleration and the cam groove 51 rotates into the direction of the indicator (e2).

The backward gearshift rotates the cam groove 51 into the direction of the indicator (e2) by rotating the cam 50 of the neutral state (N) by a single pitch distance (T). When the cam groove 51 is rotated, the follower pin 44c provided to the fourth shift fork 44 of the fourth synchronizer (S4) moves along the first half-pitch moving groove (u4) and thereby reaches one end of the second direction shift groove (u3) to thereby be in the second shift state(k3), due to the rotation. Consequently, the reserve driven gear (DR) is connected to the fourth synchronizer (S4). When the reverse driven gear (DR) is connected to the fourth synchronizer (S4), the first clutch (C1) is connected to the first input shaft 21 to thereby transfer the rotation force generated from the engine to the reverse driven gear (DR) through the sub driven gears (R1, R2) that are engaged with the first drive gear (G1). The transferred rotation force is transferred again to the output drive gear (OT2) through the second support shaft 24. The remaining other follower pins 41 c, 42c, and 43c are positioned in the neutral shift state (k1).

When the gearshift of the shifting apparatus of the dual clutch transmission according to the present invention includes 1 speed to 6 speed, 1 speed through 5 speed may be performed through the same process as the aforementioned gearshift process, and gearshift to 6 speed may be performed by connecting the second clutch (C2) and the second input shaft 22 in the waiting state (W) in which the follower pin 44c is shifted to the first direction shift groove (u1) and thereby is positioned in the first shift state (k2). Here, the cam 50 does not rotate. The fifth driven gear (D5) maintains the engagement with the third synchronizer (S3) and enters into the waiting state (W). Also, gearshift from 6 speed to 1 speed may be performed in an inverse order of the above process.

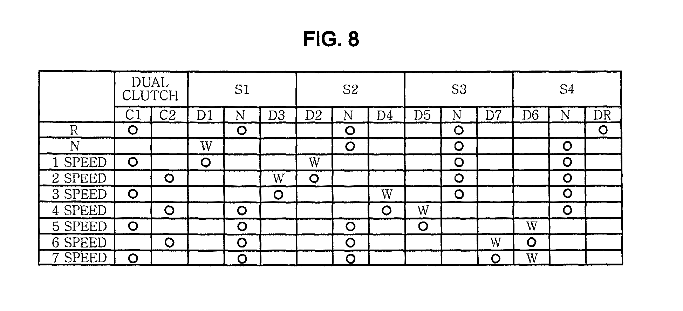

Gearshift of a shifting apparatus of a dual clutch transmission according to another embodiment of the present invention is shown in FIGS. 8 through 11.

The gearshift of the shifting apparatus of the dual clutch transmission according to the embodiment of the present invention shown in FIGS. 8 and 9 is performed through the aforementioned same gearshift operation in which the periphery of the cam 50 is divided into nine pitches (T1, T2, ∼, T9) at 40 degrees based on the rotation center shaft (O) and thus, further detailed description will be omitted here.

FIGS. 8 and 9 show an example in which the periphery of the cam 50 is divided into eight pitches (T1, T2, ∼, T8) at 45 degrees based on the rotation center shaft (O), which is the same as the aforementioned gearshift operation. Therefore, further detailed description will be omitted here.

After forming a single cam groove 51 on the cam 50 along the periphery of the cam 50, the periphery of the cam 50 is divided into a plurality of pitches, and one of the follower pins 41 c, 42c, 43c, and 44c is installed in each pitch. The follower pins 41 c, 42c, 43c, and 44c may be spaced apart from each other by at least a single pitch and thereby be mounted to be adjacent to each other. Through this, it is possible to readily perform a pitch transfer control of the follower pins 41 c, 42c, 43c, and 44c. Shift control may be softly and efficiently performed.

A shifting apparatus of a dual clutch transmission according to the present invention may form at least one cam groove on a cam and connect follower pins of a plurality of shift forks to the cam groove, thereby reducing the number of parts and achieving the simplification and enhancing reliability of a shift control operation.

Also, a shifting apparatus of a dual clutch transmission according to the present invention may reduce the number of parts and increase the processing accuracy, so that a shift control operation may be softly and efficiently performed, and thereby enables a vehicle passenger to feel comfortable.

A shifting apparatus of a dual clutch transmission according to the present invention may be applicable to an automobile manufacturing field.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. A shifting apparatus of a dual clutch transmission, the shifting apparatus comprising:
a plurality of synchronizers mounted to a first support shaft or a second support shaft, respectively, to be positioned between driven gears that are synchronized with drive gears that are connected to a first input shaft or a second input shaft connected to a first clutch and a second clutch of dual clutches;
a plurality of shift forks, each connected to the synchronizer and having a follower pin; and
a cam connected to the follower pins of the plurality of shift forks and formed with a cam groove along the periphery thereof,
wherein the cam is connected to the follower pins of the plurality of shift forks so that at least two of the follower pins provided to the plurality of shift forks, respectively, are arranged along the cam groove, and engages the synchronizers and the driven gears by shifting the follower pins so that the shift forks are moved.

2. The shifting apparatus of claim 1, wherein the plurality of synchronizers comprises:
a first synchronizer mounted to the first support shaft to be positioned between a first driven gear and a third driven gear and thereby be shifted by the shift fork to be engaged with the first driven gear or the third driven gear;
a second synchronizer disposed on one side of the first synchronizer and mounted to the first support shaft to be positioned between a second driven gear and a fourth driven gear and thereby be shifted by the shift fork to be engaged with the second driven gear or the fourth driven gear;
a third synchronizer disposed to face the first synchronizer and mounted to the second support shaft to be positioned between a fifth driven gear and a seventh driven gear and thereby be shifted by the shift fork to be engaged with the fifth driven gear or the seventh driven gear; and
a fourth synchronizer disposed on one side of the third synchronizer and mounted to the second support shaft to be positioned between a sixth driven gear and a reverse driven gear and thereby be shifted by the shift fork to be engaged with the sixth driven gear and the reverse driven gear.

3. The shifting apparatus of claim 1, wherein:
the plurality of shift forks comprises a first shift fork, a second shift fork, a third shift fork, and a fourth shift fork, and
each of the first shift fork and the second shift fork is engaged with a first guide member and is guided by the first guide member and thereby is moved through rotation of the cam, and each of the third shift fork and the fourth shift fork is engaged with a second guide member and is guided by the second guide member and thereby is moved through rotation of the cam.

4. The shifting apparatus of claim 3, wherein each of the first shift fork, the second shift fork, the third shift fork, and the fourth shift fork comprises:
a fork member engaged with an engaging groove that is formed on a sleeve;
a moving block formed on the fork member to be shifted along the first guide member or the second guide member; and
a follower pin formed on the moving block, connected to the cam groove, and shifted through rotation of the cam to make the fork member be guided by the first guide member or the second guide ember and thereby be moved.

5. The shifting apparatus of claim 1, wherein the cam comprises:
a cylindrical member; and
a plurality of guide covers combined with the cylindrical member to be spaced apart from each other to thereby form the cam groove,
wherein the cylindrical member further comprises a shaft connected to a motor to thereby be rotated by the motor, and thereby rotates in interaction with rotation of the shaft.

6. The shifting apparatus of claim 1, wherein the periphery of the cam is divided into a plurality of pitches having the equal distance, and the cam enables the synchronizer to be engaged with the driven gear by shifting the follower pin through a single pitch or a half pitch rotation and thereby moving the shift fork.

7. The shifting apparatus of claim 6, wherein the plurality of pitches is obtained by dividing the periphery of the cam at 36 degrees to 45 degrees based on a rotational center shaft.

8. The shifting apparatus of claim 6, wherein:
the plurality of pitches is divided at one of a first pitch distance, a second pitch distance, and a third pitch distance, and
the first pitch distance is used to divide the periphery of the cam into eight pitches at 45 degrees based on the rotational center shaft, the second pitch distance is used to divide the periphery of the cam into nine pitches at 40 degrees based on the rotational center shaft, and the third pitch distance is used to divide the periphery of the cam into ten pitches at 36 degrees based on the rotational center shaft.

9. The shifting apparatus of claim 6, wherein the cam groove is connected to the follower pints so that the followers provided to a first shift fork, a second shift fork, a third shift fork, and a fourth shift fork, respectively, are spaced apart from each other by at least a pitch.

10. The shifting apparatus of claim 1, wherein the cam groove comprises:
a first direction shift groove guiding the follower pin to maintain a first shift state;
an inclined groove formed to be extended from the first direction shift groove, and guiding the follower pin to shift from the first shift state to a second shift state different from the first shift state;
a second direction shift groove formed to be extended from the inclined groove, and guiding the follower pin to maintain the second shift state;
a first half pitch moving groove formed to be extended from the second direction shift groove, and guiding the follower pin to shift from the second shift state to a neutral shift state;
a plurality of neutral grooves formed to be extended from the first half pitch moving groove, and guiding the follower pin to maintain the neutral shift state that is an intermediate state between the first shift state and the second shift state; and
a second half pitch moving groove formed to be extended from each of the neutral groove and the first direction shift groove, and guiding the follower pin to shift from the neutral state to the first shift state.

11. The shifting apparatus of claim 10, wherein the plurality of neutral grooves comprises three to five neutral grooves that are connected to each other.

12. A shifting apparatus of a dual clutch transmission, the shifting apparatus comprising:
a plurality of synchronizers mounted to a first support shaft or a second support shaft, respectively, to be positioned between driven gears that are synchronized with drive gears that are connected to a first input shaft or a second input shaft connected to a first clutch and a second clutch of dual clutches;
a plurality of shift forks, each connected to the synchronizer and having a follower pin; and
a cam formed with a cam groove that is connected to the follower pints of the plurality of shift forks so that the follower pins provided to the plurality of shift forks, respectively, are arranged, and engaging the synchronizers and the driven gears by shifting the follower pins so that the shift forks are moved,
wherein the cam groove comprises:
a first direction shift groove guiding the follower pin to maintain a first shift state;
an inclined groove formed to be extended from the first direction shift groove, and guiding the follower pin to shift from the first shift state to a second shift state different from the first shift state;
a second direction shift groove formed to be extended from the inclined groove, and guiding the follower pin to maintain the second shift state;
a first half pitch moving groove formed to be extended from the second direction shift groove, and guiding the follower pin to shift from the second shift state to a neutral shift state;
a plurality of neutral grooves formed to be extended from the first half pitch moving groove, and guiding the follower pin to maintain the neutral shift state that is an intermediate state between the first shift state and the second shift state; and
a second half pitch moving groove formed to be extended from each of the neutral groove and the first direction shift groove, and guiding the follower pin to shift from the neutral state to the first shift state.

13. The shifting apparatus of claim 12, wherein the plurality of neutral grooves comprises three to five neutral grooves that are connected to each other.
